# EUROPEAN PATENT SPECIFICATION

(11) **EP 2 075 166 B1**
(45) Date of publication and mention of the grant of the patent: **17.08.2011**
(21) Application number: 08380336.1
(22) Date of filing: 12.12.2008
(51) Int. Cl.: B60R 21/34

(54) **Pedestrian protection system in automobiles**
Fußgängerschutzsystem in Autos
Système de protection des piétons dans des automobiles

(30) Priority: 28.12.2007 ES 200703469
(43) Date of publication of application: 01.07.2009
(73) Proprietor: Seat, S.A., 08760 Martorell, Barcelona (ES)
(72) Inventor: Cervera Villora, Carlos, 08760 Martorell-Barcelona (ES)
(74) Representative: Carvajal y Urquijo, Isabel

(56) References cited:
- EP-A- 0 983 909
- EP-A- 1 795 403
- WO-A-00/69707
- DE-A1- 10 037 051
- GB-A- 2 069 940
- US-A1- 2005 212 327

## Description

### Field of the invention

The present invention refers to a vehicle with a pedestrian protection system and specifically to a vehicle with a pedestrian protection system applied to the front part of the vehicle, which is the area where the pedestrian impacts in case of collision.

The system of the invention is intended to reduce the effects on the pedestrian, in case of collision, produced by the impact against the front bumper and/or hood of the engine compartment.

### Background of the invention

There are already well-known protection systems for pedestrians, intended to reduce the damages the pedestrian could suffer in case of collision, as a result of the impact against the hood of the vehicle. These systems are based on a volume increase between the hood and the rigid elements of the engine.

Nowadays there exist different solutions intended to increase the volume between the hood and the rigid elements of the engine, mainly based on complex elevation or pyrotechnic systems which move the entire or part of the hood of the engine following a Z direction, thus attaining the desired volume increase or a change of direction of the pedestrian's head after the impact.

EP1795403 reffers to a pedestrian safety system in automobiles, wherein the vehicles have a front bumper and a hood which covers an engine compartment and wherein the front bumper and hood mounted can move along an X and Z direction, between positions of maximum and minimum separation with respect to rigid elements covered by said bumper and hood, this separation being inversely proportional to the speed of the vehicle.

DE10037051 reffers to a safety device comprising an actuator operated by a sensor, which raises a bonnet and moves forward the bumper automatically, right after the raising of the bonnet.

WO00/69707 relates to a front hood assembly hinged to the chassis of the motor vehicle via a multi-jointed hinge wherein the hinge comprises means for displacing a joint depending on the vehicle speed to an upper or a lower position.

In GB 2069940 an impact protection device for vehicules comprining a bumper extending transversely across the vehicule front and a lower lying substantially rigid protection part, is described.

The main problem of these current solutions is the lack of an efficient system which compiles with the requirements related to pedestrian protection. Most existing solutions on the market are intended to produce an extra volume increase between the hood of the engine and the rigid elements, neglecting the protection of the lower extremities, which are the first to receive the impact.

An additional problem is the complexity of the protection systems for pedestrians available nowadays, which are based on complex mechanisms for increasing the entire or part of the hood of the engine, which increase the final cost of the system as well as their repair or replacement, limiting its use to medium-top range vehicles. Another notable problem is that the majority of the systems presented cannot be used more than once without replacement and, additionally, they do not have any aerodynamic improvement to the vehicle as a whole.

### Description of the invention

The present invention refers to a pedestrian protection system In automobiles which eliminates the aforementioned problems by offering a wider protection, covering possible impacts against the hood and the front bumper.

It is important to take into account that the front bumper of the vehicle can be the first element against which the pedestrian impacts, at leg level, in case of collision. Behind the front bumper there are rigid components, such as the different radiators of the vehicle, chassis cross bars, etc., which produce serious injuries on the pedestrian's extremities at the moment of the impact.

The system of the invention is based on producing a volume increase both between the hood and the rigid elements of the engine, as well as between the front bumper and the rigid elements behind it.

According to another characteristic of the invention, the aforementioned volume increase is variable, and inversely proportional to the vehicle speed, that is to say, the higher the speed, the less volume increase, which enables to improve the aerodynamic conditions of the vehicle, while the lower the speed while circulating in urban areas where a collision with a pedestrian is more likely to happen, the higher the volume increase is, to offer more protection.

The volume variation indicated is achieved by the movement of the hood and bumper of the vehicle along the X and Z direction, through simple constitution mechanism and performance.

Thanks to the new protection system for pedestrians, there is an improvement in reducing damages produced during impacts, especially in the lower extremities. This improvement in the protection of the pedestrian's lower extremities is achieved by the extra volume increase between the rigid elements protected by the bumper, especially winches and chassis cross bars, and the body of the bumper itself. The system being claimed consists of a mechanism installed in the anchorage area of the engine hood and a mobile hinge. The mechanism comprises a mobile lock of the engine hood which can rotate on a shaft, thanks to an electric engine. The hinges of the engine hood have to be modified if the device is to be installed, since the engine hood will move both in the X direction and in the Z direction. For this reason, the drive mechanism comprises modified hinges which enable the movement of the entire engine hood thanks to a track which enables the hinge to move along it, while keeping a correct opening at all times. Thanks to the aforementioned system two movements of the hood are achieved, namely rotation and translation, which have to be transmitted to the bumper. This transmission between the engine hood and the bumper is carried out through a mechanical joint between these two elements, through a joint or any other fixing system known. This joint enables all engine hood movements to be transmitted to the bumper, moving the two elements as if they were one. The system, governed by the control unit corresponding to the security systems, can have three basic performance positions, according, in all cases, to the speed parameter register by the control unit, which will adapt the system to the security or aerodynamic conditions and which will be named as position 0, position 1 and position 2.

Position 0 is the maximum security position. This position can be activated for speeds under 25 km/hour, which are typically used in urban areas, where top pedestrian protection is needed. In this position the assembly of the engine hood and bumper is in its most forward position, offering a considerable extra volume.

Position 1 offers medium security. This position can be activated for speeds between 25 km/hour and 100 km/hour, allowing for good pedestrian protection in urban areas, without penalizing the driver's vision or the aerodynamic efficiency of the vehicle on fast lanes. The extra space between the mobile elements and the rigid elements is lightly inferior to position 0, but preserves the desired effectiveness of the system.

In position 2 maximum aerodynamics is attained. This position will be activated for speeds starting at 100 km/hour and prioritizes the aeoridamic effectiveness of the vehicle, penalizing pedestrian security. The assembly of the engine hood and the bumper are completely retracted in this position, favoring the aeorodinamic profile of the vehicle and improving its features.

The system of the invention enables to attain an important improvement with regard to pedestrian security, considerably reducing lower extremities injuries and keeping the correct protection in other areas, such as the head or torso. The main advantage of the proposed system with respect to the other existing systems is the simplicity of its use, eliminating expensive complex pyrotechnic systems, which are difficult to install. Additionally, it offers the advantage of having a system for aerodynamic improvement, which enables the optimization of the aerodynamic coefficient of the vehicle, thus slightly reducing consumption and, therefore, reducing medium emissions of gases which are harmful for the atmosphere.

### Brief description of the drawings

The attached drawings show a non-limiting example of an embodiment, which will enable to understand better the characteristics and advantages of the invention.

In the drawings:
Figure 1 shows, in a schematic longitudinal section, a front bumper and the hood of the engine compartment, mounted using the system of the invention with position 0 for maximum protection.
Figure 2 shows a similar view to figure 1, with the bumper and hood in position 1.
Figure 3 shows a similar view to figure 1, with the bumper and hood in position 2.
Figure 4 shows a perspective view of the drive mechanism for moving the bumper and the hood, between the different positions.
Figure 5 shows a lateral view of the drive mechanism positions corresponding to the situations of the bumper and hood of figures 1 to 3.

### Detailed description of an embodiment

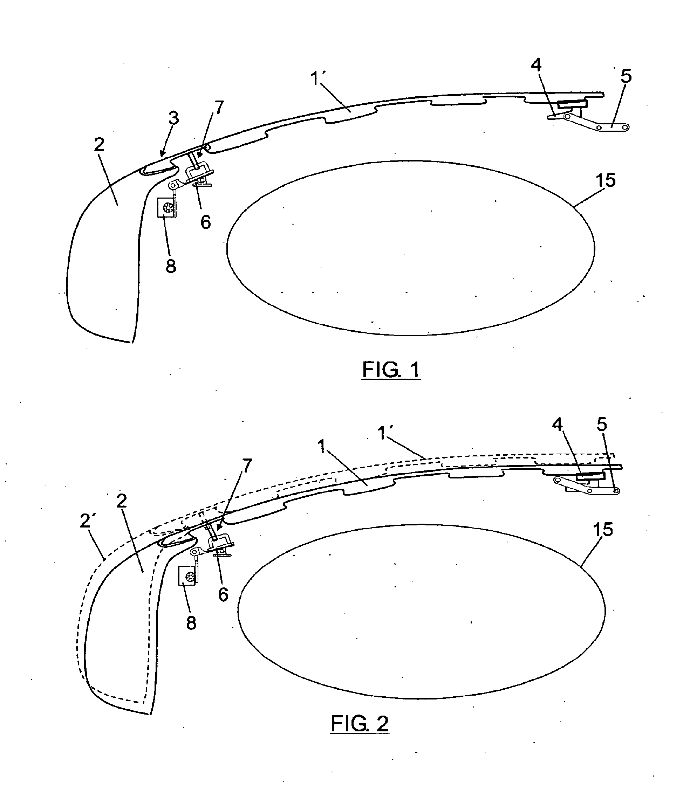

Figures 1 to 3 show a longitudinal section of the hood 1, which shows the front compartment of the vehicle where the engine 15 is located. The hood 1 is mechanically connected to the front bumper 2 by any mechanical system generally indicated using the reference 3.

The hood 1 is mounted using a modified hinge 4, to which a track 5 has been incorporated, along which said hinge can move in the X direction. The hood 1 is also related to a rotation mechanism 6, which is connected to the anchorage or lock 7 of said hood and which can be activated through an electric engine 8.

Through the drive mechanism 6 and thanks to the possibility of moving the hinge 4 along the track 5, the assembly of the hood 1 and the bumper 2 can move along the X and Z direccion, since the bumper 2 and the hood 1 being mechanically joined, both components move as if they were one.

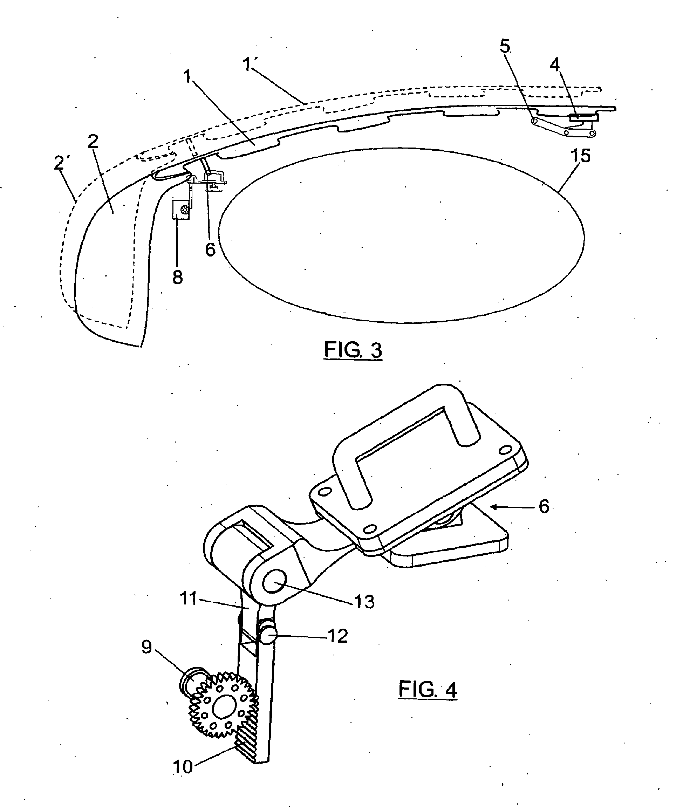

The rotation mechanism 6 can be directly connected to the electric engine 8 or, as it can be seen in figure 4, it can be engaged with a rack 10 which is connected to the mechanism 6 through an intermediate arm 11 which is articulated according to the shaft 12 with the rack 10 and according to the shaft 13 with said mechanism 6.

If there is enough space in the engine hole, the intermediate transmission mechanism described with reference to figure 4 can be dispensed with, directly connecting the drive mechanism 6 to the electric engine 8 or using a simple gear assembly. By contrast, if there is no space, it will be necessary to use a transmission mechanism, like the one shown in figure 4, which enables to place the electric engine 8 away from the drive mechanism 6.

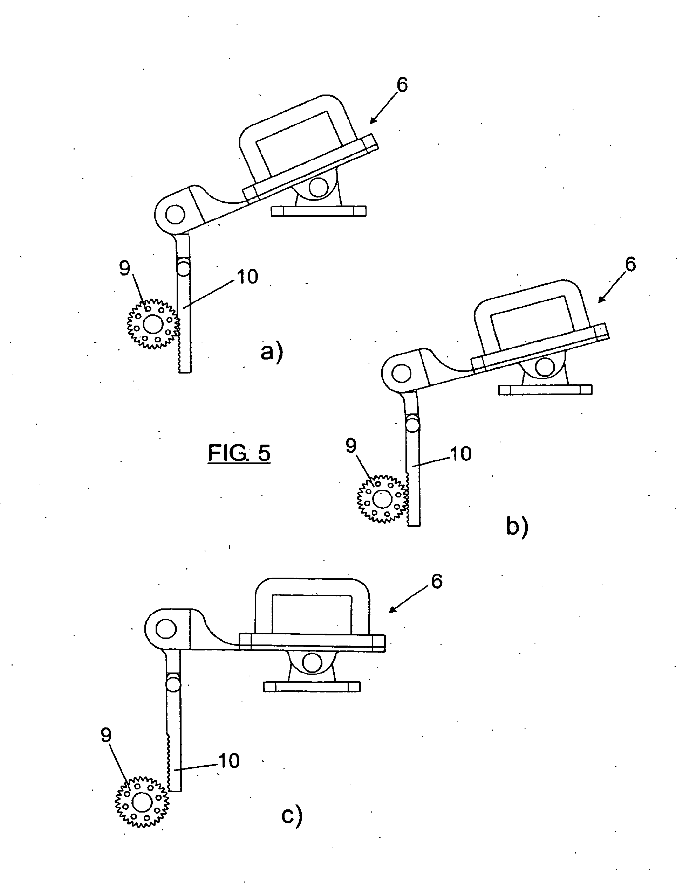

The activation of the electric engine 8 will be governed by the control unit corresponding to the security systems of the vehicle and, according to its speed, the assembly shown in figure 4 can have, for example, any of the three positions shown in figure 5 and indicated as a), b) and c), in which the hood 1 and front bumper 2 will be placed in the positions shown in figures 1, 2 and 3, which are indicated as "position 0", "position 1" and "position 2".

"Position 0", shown in figure 1, with the rotation mechanism 6 in position a) of figure 5, is the one of maximum security. This position is activated for speeds under 25 km/hour, for example, which is typical of urban areas, where maximum pedestrian protection is needed. In this position the assembly of the hood 1 and bumper 2 is furthest away from the rigid elements of the engine 15 of the vehicle, offering a considerable extra volume. The electric engine 8, controlled by the control unit, positions the assembly of the hood 1 and bumper 2 in its highest position, starting at the resting position. In this situation, the hinge 4 is in the highest position of the rack 5, thus allowing a slight elevation of the part of the hood 1 that is closest to the car windshield, preventing the head of a pedestrian who has been in a collision from hitting it.

"Position 1", shown in figure 2, with the rotation mechanism 6 in position b) of figure 5, will be a position of medium security. This position is activated, for example, for speeds ranging from 25 km/hour to 100 km/hour. The extra space between the mobile elements and the rigid elements is slightly smaller than in the case of "position 0", previously described with reference to figure 1, but it maintains the desired effectiveness of the system. The assembly formed by the hood 1 and the bumper 2 is slightly retracted with respect to position 0, thus reducing part of the free space between the elements of engine 15 of the vehicle and the hood 1, but maintaining a good degree of protection, both for the pedestrian's head and his/her lower extremities and offering a good vision and a small aerodynamic improvement to the user of the vehicle.

Figure 3 shows the hood 1 and bumper 2 in "position 2", which is the most aerodynamic one, with the rotation mechanism 6, in position c) of figure 5. This position can be activated for speeds starting at 100 km/hour and it prioritizes the aerodynamic efficiency of the vehicle, at the expense of pedestrian security. The assembly of the hood 1 and the bumper 2 is entirely retracted in this position, favoring the aerodynamic profile of the vehicle and improving its features. In this position hinge 4 is in the most retracted position of rack 5, considerably limiting the effectiveness of the system for pedestrian protection but slightly increasing the aerodynamic characteristics of the vehicle, which translates into an improved consumption and a reduction of pollutant emissions.

Figures 2 and 3 show through a discontinuous line and with reference to numbers 1 and 2, the hood and front bumper condition in position 0 of figure 1, where it is possible to see the movement of these components to "positions 2 and 3" and the variation in volume between them and the rigid elements of the engine 15 of the vehicle.

## Claims

1. Vehicle with a pedestrian protection system, wherein the vehicle has a front bumper (2) and a hood (1) which covers an engine (15) compartment and wherein the front bumper (2) and hood (1) mounted can move along an X and Z direction, between positions of maximum and minimum separation with respect to rigid elements covered by said bumper (2) and hood (1), this separation being inversely proportional to the speed of the vehicle **characterized in that** the movement of the hood (1) and front bumper (2) is produced by a drive mechanism (6) connected to an anchorage (7) of the hood (1) and by a mobile articulation for said hood (1), the front bumper (2) being connected to said hood (1) such that the front bumper (2) is dragged by said hood (1) as said hood (1) moves.

2. Vehicle with pedestrian protection system according to claim 1, **characterized in that** the aforementioned drive mechanism (6) is governed by a central unit corresponding to security means of the vehicle, according to the speed of said vehicle, the separation of the hood (1) and bumper (2) being in inverse relation to the speed of the vehicle.

3. Vehicle with a pedestrian protection system in automobiles according to claim 2, **characterized in that** front bumper (2) and hood (1) can be moved by activating the drive mechanism (6), between an extreme position of maximum separation and safety, for speeds in urban areas; a position of minimum separation and safety, for speeds in highways and fast lanes; and an intermediate position of separation and safety, for speeds between driving speeds in urban areas and driving speeds in fast lanes.

4. Vehicle with a pedestrian protection system in automobiles according to claim 3, **characterized in that** the drive mechanism (6) comprises an electric engine (8) related to the anchorage (7) elements of the hood (1) by a transmission device which produces the lineal movement of the front bumper (2) and hood (1) in the Z direction.

5. Vehicle with a pedestrian protection system in automobiles according to claim 3, **characterized in that** the mobile articulation of the hood (1) comprises a hinge (4) mounted on a track (5), along which it can move in the direction X and Z.

## Patentansprüche

1. Fahrzeug mit einem Fußgängerschutzsystem, wobei das Fahrzeug eine Vorderstoßstange (2) und eine Motorhaube (1), die einen Motorraum (15) abdeckt, aufweist, und wobei die Vorderstoßstange (2) und die eingebaute Motorhaube (1) sich in einer X- und Z-Richtung zwischen Positionen einer maximalen und minimalen Trennung im Verhältnis zu unbiegsamen Elementen, die von der Stoßstange (2) und der Motorhaube (1) abgedeckt werden, bewegen können, wobei diese Trennung zur Geschwindigkeit des Fahrzeugs umgekehrt proportional ist, **dadurch gekennzeichnet, dass** die Bewegung der Motorhaube (1) und der Vorderstoßstange (2) von einem Antriebsmechanismus (6), der mit einer Verankerung (7) der Motorhaube (1) verbunden ist, und von einem beweglichen Gelenk für die Motorhaube (1) erzeugt wird, wobei die Vorderstoßstange (2) mit der Motorhaube derart verbunden ist, dass die Vorderstoßstange (2) von der Motorhaube (1) mitgenommen wird, wenn sich die Motorhaube (1) bewegt.

2. Fahrzeug mit einem Fußgängerschutzsystem nach Anspruch 1, **dadurch gekennzeichnet, dass** der zuvor erwähnte Antriebsmechanismus (6) von einer Zentraleinheit, die Sicherheitsmitteln des Fahrzeugs entspricht, gemäß der Geschwindigkeit des Fahrzeugs geregelt wird, wobei die Trennung der Motorhaube (1) und der Stoßstange (2) in einem umgekehrten Verhältnis zur Geschwindigkeit des Fahrzeugs steht.

3. Fahrzeug mit einem Fußgängerschutzsystem bei Kraftfahrzeugen nach Anspruch 2, **dadurch gekennzeichnet, dass** die Vorderstoßstange (2) und die Motorhaube (1) bewegt werden können, indem der Antriebsmechanismus (6) zwischen einer Endposition maximaler Trennung und Sicherheit für Geschwindigkeiten in Ballungsgebieten; einer Position minimaler Trennung und Sicherheit für Geschwindigkeiten auf Autobahnen und Schnellstraßen; und einer Zwischenposition von Trennung und Sicherheit für Geschwindigkeiten zwischen Fahrgeschwindigkeiten in Ballungsgebieten und Fahrgeschwindigkeiten auf Schnellstraßen aktiviert wird.

4. Fahrzeug mit einem Fußgängerschutzsystem bei Kraftfahrzeugen nach Anspruch 3, **dadurch gekennzeichnet, dass** der Antriebsmechanismus (6) einen Elektromotor (8) umfasst, der mit den Verankerungselementen (7) der Motorhaube (1) über eine Übertragungsvorrichtung zusammenhängt, welche die direkte Bewegung der Vorderstoßstange (2) und der Motorhaube (1) in der Z-Richtung erzeugt.

5. Fahrzeug mit einem Fußgängerschutzsystem bei Kraftfahrzeugen nach Anspruch 3, **dadurch gekennzeichnet, dass** das bewegliche Gelenk der Motorhaube (1) ein Scharnier (4) umfasst, das auf einer Schiene (5) eingebaut ist, an der es sich in der X- und Z-Richtung bewegen kann.

## Revendications

1. Véhicule équipé d'un système de protection des piétons, dans lequel le véhicule a un pare-choc avant (2) et un capot (1) couvrant un compartiment moteur (15) et sur lequel le pare-choc avant (2) et le capot (1) montés peuvent se déplacer le long d'une direction X et Z, entre des positions de séparation maximum et minimum par rapport à des éléments rigides couverts par ce pare-choc (2) et ce capot (1), cette séparation étant inversement proportionnelle à la vitesse du véhicule, **caractérisé en ce que** le mouvement du capot (1) et du pare-choc avant (2) est produit par un mécanisme mobile (6) raccordé à un ancrage (7) du capot (1) et par une articulation mobile pour ce capot (1), le pare-choc avant (2) étant raccordé à ce capot de sorte que le pare-choc avant (2) est entraîné par ce capot (1) lorsque ce capot (1) bouge.

2. Véhicule équipé d'un système de protection des piétons selon la revendication 1, **caractérisé en ce que** le mécanisme d'entraînement susmentionné (6) est commandé par une unité centrale correspondant à des moyens de sécurité du véhicule, en fonction de la vitesse de ce véhicule, la séparation du capot (1) et du pare-choc (2) étant inversement proportionnelle à la vitesse du véhicule.

3. Véhicule équipé d'un système de protection des piétons selon la revendication 2, **caractérisé en ce que** le pare-choc avant (2) et le capot (2) peuvent être déplacés en activant le mécanisme d'entraînement (6), entre une position extrême de séparation maximum et de sécurité pour des vitesses en agglomération urbaine ; une position de séparation minimum et de sécurité pour des vitesses sur autoroutes et sur voies rapides ; et une position intermédiaire de séparation et de sécurité pour des vitesses situées entre des vitesses de conduite en agglomération urbaine et des vitesses de conduite sur voies rapides.

4. Véhicule équipé d'un système de protection des piétons selon la revendication 3, **caractérisé en ce que** le mécanisme d'entraînement (6) comprend un moteur électrique (8) raccordé à l'ancrage (7) des éléments du capot (1) par un dispositif de transmission qui produit le mouvement linéaire du pare-choc (2) et du capot (1) dans la direction Z.

5. Véhicule équipé d'un système de protection des piétons selon la revendication 3, **caractérisé en ce que** l'articulation mobile du capot (1) comprend une charnière (4) montée sur une barre (5), le long de laquelle elle peut bouger dans la direction X et Z.
